(19) Europäisches Patentamt
European Patent Office
Office européen des brevets

(11) **EP 0 915 920 B1**

(12) **EUROPÄISCHE PATENTSCHRIFT**

(45) Veröffentlichungstag und Bekanntmachung des Hinweises auf die Patenterteilung:
**19.09.2001 Patentblatt 2001/38**

(51) Int Cl.[7]: **C08F 290/04**, C08F 285/00

(21) Anmeldenummer: **97940044.7**

(86) Internationale Anmeldenummer:
**PCT/EP97/04126**

(22) Anmeldetag: **29.07.1997**

(87) Internationale Veröffentlichungsnummer:
**WO 98/05694 (12.02.1998 Gazette 1998/06)**

(54) **SCHLAGZÄHE THERMOPLASTISCHE FORMMASSEN**

IMPACT RESISTANT THERMOPLASTIC MOULDING MATERIALS

MATIERES DE MOULAGE THERMOPLASTIQUES RESISTANT AUX CHOCS

(84) Benannte Vertragsstaaten:
**BE DE ES FR GB IT NL**

(30) Priorität: **01.08.1996 DE 19631170**

(43) Veröffentlichungstag der Anmeldung:
**19.05.1999 Patentblatt 1999/20**

(73) Patentinhaber: **BASF AKTIENGESELLSCHAFT**
**67056 Ludwigshafen (DE)**

(72) Erfinder:
• **LINDENSCHMIDT, Gerhard**
  **D-69181 Leimen (DE)**
• **MC KEE, Graham, Edmund**
  **D-67433 Neustadt (DE)**
• **ROSENAU, Bernhard**
  **D-67433 Neustadt (DE)**
• **NAARMANN, Herbert**
  **D-67227 Frankenthal (DE)**
• **FISHER, Michael**
  **D-67071 Ludwigshafen (DE)**

(74) Vertreter: **Isenbruck, Günter, Dr. et al**
**Patent- und Rechtsanwälte,**
**Bardehle-Pagenberg-Dost-Altenburg-Geissler-Isenbruck**
**Theodor-Heuss-Anlage 12**
**68165 Mannheim (DE)**

(56) Entgegenhaltungen:
EP-A- 0 520 478          EP-A- 0 621 293
EP-A- 0 699 694          US-A- 3 862 101

**Beschreibung**

Die Erfindung betrifft thermoplastische Formmassen mit hoher Schlagzähigkeit. Insbesondere betrifft die Erfindung die Verwendung bestimmter Verbindungen zur Herstellung von teilchenförmigen Emulsionspolymerisaten, sowie diese enthaltende Formmassen und Formkörper daraus.

Aus der DE-A-1 260 135 sind thermoplastische Formmassen bekannt, die aus einer Copolymermatrix und einem Pfropfcopolymerisat bestehen. Das Pfropfcopolymerisat enthält einen Kern aus einem Copolymerisat eines Acrylsäureesters eines Alkohols mit 4 - 8 Kohlenstoffatomen und eines Acrylsäureesters des Tricyclodecenylalkohols. Die Schale besteht aus einem Copolymer aus Styrol und Acrylnitril. Die Copolymermatrix besteht aus Styrol und Acrylnitril als Monomereinheiten.

Aus DE-A-1 911 882 sind ähnliche Formmassen aus einem Pfropfcopolymerisat mit einem Acrylsäureesterkern und einer Styrol/Acrylnitril-Schale, eingebettet in eine Copolymermatrix aus Styrol und Acrylnitril, bekannt. Die Pfropfcopolymerisate weisen mittlere Teilchendurchmesser zwischen 150 und 800 nm auf.

Aus der DE-A-2 826 925 sind thermoplastische Formmassen bekannt, die aus einem Pfropfcopolymerisat aus einem vernetzten Acrylsäureesterpolymerisat mit einem mittleren Teilchendurchmesser von etwa 50 - 150 nm und einer Pfropfhülle aus Styrol und Acrylnitril sowie einem weiteren Pfropfcopolymerisat aus einem vernetzten Acrylsäureesterpolymerisat mit einem mittleren Teilchendurchmesser von etwa 200 bis 500 nm und Styrol und Acrylnitril als Pfropfhülle bestehen, wobei die beiden Pfropfcopolymerisate in ein Acrylnitril/Styrol-Copolymerisat eingebracht sind.

In der DE-A-3 227 555 sind thermoplastische Formmassen beschrieben, die Pfropfcopolymerisate enthalten. Die Pfropfgrundlagen bestehen aus vernetzten Polyacrylsäureestern, der Aufbau der Pfropfhülle erfolgt in zwei Stufen, wobei in einer ersten Stufe 20 bis 70 Gew.-% eines vinylaromatischen Monomeren, insbesondere Styrol, und in einer zweiten Stufe 30 bis 80 Gew.-% eines Gemisches eines vinylaromatischen und eines ethylenisch ungesättigten Monomeren, insbesondere Styrols und Acrylnitrils im Gewichtsverhältnis 90:10 bis 60:40 aufgebracht werden. Die Pfropfcopolymerisate liegen in einem Copolymerisat aus Styrol und Acrylnitril vor.

Diese Formmassen sind witterungsbeständig und schlagzäh. Für einige Anwendungen ist die Schlagzähigkeit jedoch zu verbessern.

Aufgabe der vorliegenden Erfindung ist die Bereitstellung von thermoplastischen Formmassen, die ein teilchenförmiges Emulsionspolymerisat in einem amorphen oder teilkristallinen Polymerisat enthalten und eine gegenüber den bekannten Formmassen verbesserte Schlagzähigkeit aufweisen.

Gelöst wird die Aufgabe durch Verwendung von Verbindungen der allgemeinen Formel (I)

$$H_2C = CR^1 - C(O) - Y - R^2 \qquad\qquad (I)$$

in der

R$^1$ H, CH$_3$, C$_2$H$_5$, C$_3$H$_7$
Y O, NH, O-Phenylen
R$^2$ ein Rest aus 2 bis 10000 polymerisierten Isobuteneinheiten oder
2 - 1000 polymerisierten Butadieneinheiten oder Isopreneinheiten ist

zur Herstellung von teilchenförmigen Emulsionspolymerisaten mit einer Glasübergangstemperatur von unterhalb 0°C und einer mittleren Teilchengröße von 50 - 1000 nm.

Dabei sind vorzugsweise 1 - 80 Gew.-%, insbesondere 5 - 50 Gew.-% der Emulsionspolymerisate aus Verbindungen der allgemeinen Formel I aufgebaut.

Gegenstand der Erfindung sind auch thermoplastische Formmassen, enthaltend, bezogen auf die Summe der Mengen der Komponenten A und B, und ggf. C und/oder D, die insgesamt 100 Gew.-% ergibt,

a: 1 - 99 Gew.-%, vorzugsweise 15 - 60 Gew.-%, insbesondere 25 - 50 Gew.-%, eines teilchenförmigen Emulsionspolymerisats mit einer Glasübergangstemperatur unterhalb von 0 °C und einer mittleren Teilchengröße von 50 - 1000 nm, vorzugsweise 50 - 500 nm, das zu 1 - 80 Gew.-%, bezogen auf die Menge der Komponente A, aus Verbindungen der allgemeinen Formel I, wie sie vorstehend definiert sind, aufgebaut ist, als Komponente A,

b: 1 - 99 Gew.-%, vorzugsweise 40 - 85 Gew.-%, insbesondere 50 - 75 Gew.-%, mindestens eines amorphen oder teilkristallinen Polymerisats als Komponente B,

c: 0 - 50 Gew.-% Polycarbonate als Komponente C und

d: 0 - 50 Gew.-% faser- oder teilchenförmige Füllstoffe oder deren Gemische als Komponente D.

Vorzugsweise sind 5 - 50 Gew.-% der Emulsionspolymerisate A aus Verbindungen der allgemeinen Formel I aufgebaut.

Vorzugsweise sind die Emulsionspolymerisate Pfropfcopolymerisate aus einer teilchenförmigen Pfropfgrundlage A1 mit einer Glasübergangstemperatur unterhalb von 0°C und einer Pfropfauflage A2 aus vinylaromatischen und/oder ethylenisch ungesättigten Monomeren, wobei 2 - 80 Gew.-%, vorzugsweise 5 - 50 Gew.-% der Pfropfgrundlage A1 aus Verbindungen der allgemeinen Formel I aufgebaut sind.

Gegenstand der Erfindung sind weiterhin die Emulsionspolymerisate, Verfahren zur Herstellung der erfindungsgemäßen Formmassen, deren Verwendung zur Herstellung von Formkörpern, die so hergestellten Formkörper und das Verfahren zu ihrer Herstellung.

Die erfindungsgemäßen Formmassen weisen gegenüber den bekannten Formmassen eine verbesserte Schlagzähigkeit auf.

Zunächst werden die erfindungsgemäß eingesetzten Verbindungen beschrieben.

Sie weisen die nachstehende allgemeine Formel (I) auf

$$H_2C = CR^1\text{-}C(O)\text{-}Y\text{-}R^2$$

in der

R$^1$ H, CH$_3$, C$_2$H$_5$. C$_3$H$_7$
Y O, NH, O-Phenylen
R$^2$ ein Rest aus 2 bis 10000 polymerisierten Isobuteneinheiten oder
2 - 1000 polymerisierten Butadieneinheiten oder Isopreneinheiten ist.

Vorzugsweise ist der Rest R$^1$ H oder CH$_3$, insbesondere H. Es handelt sich in diesem Fall um Acrylverbindungen.

Y kann O, NH oder O-Phenylen sein, wobei der Phenylenrest substituiert sein kann durch einen oder mehrere C$_{1-4}$-Alkylreste, Nitrogruppen, oder Halogenatome, wie Fluor, Chlor, Brom.

Vorzugsweise ist Y O oder NH, d.h. die Verbindungen der allgemeinen Formel sind Acrylate oder Acrylamide oder die entsprechenden Alkylacrylate oder Alkylacrylamide.

Gemäß einer Ausführungsform der Erfindung ist R$^2$ ein Rest aus 2 - 10000, vorzugsweise 10 - 5000, insbesondere 100 - 1000 polymerisierten Isobuteneinheiten. Die Isobuteneinheiten können somit als Oligomere oder Polymere vorliegen.

Die Herstellung dieser Verbindungen ist beschrieben in BMFT Symposium, Würzburg, 1994, Seite 1050, BMFT-Projekt OJM 40338.

Gemäß einer Ausführungsform der Erfindung ist der Rest R$^2$ ein Rest aus 2 - 1000, vorzugsweise 10 bis 500, insbesondere 50 - 150 polymerisierten Butadieneinheiten oder Isopreneinheiten. Dabei ist Y vorzugsweise O. Die Isopreneinheiten sind somit Oligo-, Telechelen- oder Polydienyleinheiten aus Butadien- oder Isoprengrundbausteinen.

Diese Verbindungen können hergestellt werden durch Umsetzen von Oligo-, Telechelen- oder Polybutadienen oder -isoprenen mit endständigen OH-Gruppen, mit (Meth)acrylsäureanhydrid oder -chlorid. Die Ausgangsprodukte zur Herstellung sind beispielsweise beschrieben in Makromol. Chem. 177, 1625 (1976); 180, 41 (1979).

Die Verwendung der vorstehend beschriebenen Verbindungen in teilchenförmigen Emulsionspolymerisaten bzw. den nachstehend beschriebenen Formmassen führt zu Formmassen mit verbesserter Schlagzähigkeit.

**FORMMASSEN**

Die erfindungsgemäßen Verbindungen werden eingesetzt in thermoplastischen Formmassen, enthaltend, bezogen auf die Summe der Mengen der Komponenten A und B, und ggf. C und/oder D, die insgesamt 100 Gew.-% ergibt,

a: 1 - 99 Gew.-%, vorzugsweise 15 - 60 Gew.-%, insbesondere 25 - 50 Gew.-%, eines teilchenförmigen Emulsionspolymerisats mit einer Glasübergangstemperatur unterhalb von 0 °C und einer mittleren Teilchengröße von 50 - 1000 nm, vorzugsweise 50 - 500 nm, das zu 1 - 80 Gew.-%, bezogen auf die Menge der Komponente A, aus Verbindungen der allgemeinen Formel I, wie sie vorstehend definiert sind, aufgebaut ist, als Komponente A,

b: 1 - 99 Gew.-%, vorzugsweise 40 - 85 Gew.-%, insbesondere 50 - 75 Gew.-%, mindestens eines amorphen oder teilkristallinen Polymerisats als Komponente B,

c: 0 - 50 Gew.-% Polycarbonate als Komponente C und

d: 0 - 50 Gew.-% faser- oder teilchenförmige Füllstoffe oder deren Gemische als Komponente D.

Die Komponenten der erfindungsgemäßen Formmassen werden nachstehend beschrieben.

**KOMPONENTE A**

Komponente A ist ein teilchenförmiges Emulsionspolymerisat mit einer Glasübergangstemperatur unterhalb von 0°C und einer mittleren Teilchengröße von 50 - 1000 nm.

Gemäß einer weiteren erfindungsgemäßen Ausführungsform ist die Teilchengrößenverteilung der Komponente A bimodal, wobei 60 - 90 Gew.-% eine mittlere Teilchengröße von 50 - 200 nm und 10 - 40 Gew.-% eine mittlere Teilchengröße von 50 - 400 nm aufweisen, bezogen auf das Gesamtgewicht der Komponente A.

Als mittlere Teilchengröße bzw. Teilchengrößenverteilung werden die aus der integralen Massenverteilung bestimmten Größen angegeben. Bei den erfindungsgemäßen mittleren Teilchengrößen handelt es sich in allen Fällen um die Gewichtsmittel der Teilchengrößen, wie sie mittels einer analytischen Ultrazentrifuge entsprechend der Methode von W. Scholtan und H. Lange, Kolloid-Z. und Z.-Polymere 250 (1972), Seiten 782 - 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Massenverteilung bezeichnet wird, ist dabei als der Teilchendurchmesser definiert, bei dem 50 Gew.-% der Teilchen einen kleineren Durchmesser haben als der Durchmesser, der dem $d_{50}$-Wert entspricht.

Ebenso haben dann 50 Gew.-% der Teilchen einen größeren Durchmesser als der $d_{50}$-Wert. Zur Charakterisierung der Breite der Teilchengrößenverteilung der Kautschukteilchen werden neben dem $d_{50}$-Wert (mittlerer Teilchendurchmesser) die sich aus der integralen Massenverteilung ergebenden $d_{10}$-und $d_{90}$-Werte herangezogen. Der $d_{10}$- bzw. $d_{90}$-Wert der integralen Massenverteilung ist dabei entsprechend dem $d_{50}$-Wert definiert mit dem Unterschied, daß sie auf 10 bzw. 90 Gew.-% der Teilchen bezogen sind. Der Quotient

$$\frac{d_{90} - d_{10}}{d_{50}} = Q$$

stellt ein Maß für die Verteilungsbreite der Teilchengröße dar. Als Komponente A erfindungsgemäß verwendbare Emulsionspolymerisate A weisen vorzugsweise Q-Werte kleiner als 0,5, insbesondere kleiner als 0,35 auf.

Die Glasübergangstemperatur des Emulsionspolymerisats A wie auch der anderen erfindungsgemäß verwendeten Komponenten wird mittels DSC (Differential Scanning Calorimetry) nach ASTM 3418 (mid point temperature) bestimmt.

1 - 80 Gew.-%, vorzugsweise 5 - 50 Gew.-% der Emulsionspolymerisate sind aus Verbindungen der allgemeinen Formel (I) aufgebaut.

Das Emulsionspolymerisat A enthält gemäß einer Ausführungsform der Erfindung neben den Verbindungen der allgemeinen Formel I als Bausteine solche einschlägig üblicher Kautschuke, wie Epichlorhydrin-Kautschuke, Ethylen-Vinylacetat-Kautschuke, Polyethylenchlorsulfonkautschuke, Polyetherkautschuke, hydrierte Dienkautschuke, Polyalkenamerkautschuke, Acrylatkautschuke, Ethylen-Propylen-Kautschuke, Ethylen-Propylen-Dien-Kautschuke, Butylkautschuke und Fluorkautschuke, vorzugsweise Acrylatkautschuk, Ethylen-Propylen(EP)-Kautschuk oder Ethylen-Propylen-Dien(EPDM)-Kautschuk, insbesondere Acrylatkautschuk.

Bei den Acrylatkautschukgrundbausteinen handelt es sich vorzugsweise um ein oder mehrere $C_{1-8}$-Alkylacrylate, vorzugsweise $C_{4-8}$-Alkylacrylate, wobei bevorzugt mindestens teilweise Butyl-, Hexyl-, Octyl- oder 2-Ethylhexylacrylat, insbesondere n-Butyl- und 2-Ethylhexylacrylat, verwendet wird. Diese Alkylacrylat enthaltenden Kautschuke können bis zu 30 Gew.-% harte Polymere bildende Monomere, wie Vinylacetat, (Meth)acrylnitril, Styrol, substituiertes Styrol, Methylmethacrylat oder Vinylether, einpolymerisiert enthalten.

Die Emulsionspolymerisate A enthalten gemäß einer Ausführungsform der Erfindung weiterhin 0,01 - 20 Gew.-%, vorzugsweise 0,1 - 5 Gew.-%, an vernetzend wirkenden, polyfunktionellen Monomeren (Vernetzungsmonomere). Beispiele hierfür sind Monomere, die 2 oder mehr zur Copolymerisation befähigte Doppelbindungen enthalten, die vorzugsweise nicht in den 1,3-Stellungen konjugiert sind.

Geeignete Vernetzungsmonomere sind beispielsweise Divinylbenzol, Diallylmaleat, Diallylfumarat, Diallylphthalat, Diethylphthalat, Triallylcyanurat, Triallylisocyanurat, Tricyclodecenylacrylat, Dihydrodicyclopentadienylacrylat, Triallylphosphat, Allylacrylat, Allylmethacrylat. Als besonders günstiges Vernetzungsmonomer hat sich Tricyclodecenylacrylat erwiesen (vgl. DE-C-12 60 135).

In manchen Fällen kann es zweckmäßig sein, ein Emulsionspolymerisat A aus unvernetztem Polymer zu verwenden. Als Monomere zur Herstellung dieser Polymere können zusätzlich zu den Verbindungen der Formel I alle voranstehend genannten dienen, z.B. Acrylsäureester, inbesondere n-Butylund Ethylhexylacrylat, sowie Ethylen, Propylen, Butylen, Isobutylen.

### Kern/Schale - Emulsionspolymerisat A

Bei dem Emulsionspolymerisat A kann es sich auch um ein mehrstufig aufgebautes Polymerisat handeln (sog. "Kern/Schale-Aufbau", "core-shell morphology"). Beispielsweise kann ein kautschukelastischer Kern ($T_g$ < 0°C) von einer "harten" Schale (Polymere mit $T_g$ > 0°C) oder umgekehrt umhüllt sein.

In einer besonders bevorzugten Ausgestaltung der Erfindung handelt es sich bei der Komponente A um ein Pfropfcopolymerisat. Die Pfropfcopolymerisate A der erfindungsgemäßen Formmassen haben dabei eine mittlere Teilchengröße $d_{50}$ von 50 - 1000 nm, bevorzugt von 50 - 600 nm und besonders bevorzugt von 50 - 400 nm. Diese Teilchengrößen können erzielt werden, wenn man als Pfropfgrundlage A1 dieser Komponente A Teilchengrößen von 50 - 350 nm, bevorzugt von 50 - 300 nm und besonders bevorzugt von 50 - 250 nm verwendet.

Das Pfropfcopolymerisat A ist im allgemeinen ein- oder mehrstufig, d.h. ein aus einem Kern und einer oder mehreren Hüllen aufgebautes Polymerisat. Das Polymerisat besteht aus einer Grundstufe (Pfropfkern) A1 und einer oder - bevorzugt - mehreren darauf gepfropften Stufen A2 (Pfropfauflage), den sogenannten Pfropfstufen oder Pfropfhüllen.

Durch einfache Pfropfung oder mehrfache schrittweise Pfropfung können eine oder mehrere Pfropfhüllen auf die Kautschukteilchen aufgebracht werden, wobei jede Pfropfhülle eine andere Zusammensetzung haben kann. Zusätzlich zu den pfropfenden Monomeren können polyfunktionelle vernetzende oder reaktive Gruppen enthaltende Monomere mit aufgepfropft werden (s. z.B. EP-A-0 230 282, DE-A-36 01 419, EP-A-0 269 861).

In einer bevorzugten Ausführungsform besteht Komponente A aus einem mehrstufig aufgebauten Pfropfcopolymerisat, wobei die Pfropfstufen im allgemeinen aus harzbildenden Monomeren hergestellt sind und eine Glastemperatur $T_g$ oberhalb von 30°C vorzugsweise oberhalb von 50°C haben. Der mehrstufige Aufbau dient u.a. dazu, eine (Teil-)Verträglichkeit der Kautschukteilchen A mit dem Thermoplasten B zu erzielen.

Pfropfcopolymerisate A werden hergestellt beispielsweise durch Pfropfung von mindestens einem der im folgenden aufgeführten Monomeren A2 auf mindestens eine der Pfropfgrundlagen bzw. Pfropfkernmaterialien A1.

Gemäß einer Ausführungsform der Erfindung sind die Pfropfcopolymerisate mit einer Glasübergangstemperatur von unterhalb 0°C und einer mittleren Teilchengröße von 50 - 1000 nm aufgebaut aus einer teilchenförmigen Pfropfgrundlage A1 mit einer Glasübergangstemperatur unterhalb von 0°C und einer Pfropfauflage A2 aus vinylaromatischen und/oder ethylenisch ungesättigten Monomeren, wobei 2 bis 80 Gew.-%, vorzugsweise 5 bis 50 Gew.-% der Pfropfgrundlage A1 aus Verbindungen der allgemeinen Formel I aufgebaut sind.

Vorzugsweise handelt es sich bei Komponente A um ein Pfropfcopolymerisat aus

a1: 55 - 80 Gew.-%, vorzugsweise 55 - 65 Gew.-%, einer teilchenförmigen Pfropfgrundlage A1 mit einer Glasübergangstemperatur unterhalb von 0°C, die zu 2 - 80 Gew.-%, bezogen auf die Menge der Komponente A1, aus Verbindungen der allgemeinen Formel I, wie sie vorstehend definiert sind, aufgebaut ist,

a2: 20 - 45 Gew.-%, vorzugsweise 35 - 45 Gew.-%, einer Pfropfauflage A2 aus den Monomeren, bezogen auf A2,

a21: 40 - 100 Gew.-%, vorzugsweise 65 - 85 Gew.-%, Einheiten eines vinylaromatischen Monomeren, vorzugsweise des Styrols, eines substituierten Styrols oder eines (Meth)acrylsäureesters oder deren Gemische, insbesondere des Styrols und/oder $\alpha$-Methylstyrols als Komponente A21 und

a22: bis 60 Gew.-%, vorzugsweise 15 - 35 Gew.-%, Einheiten eines ethylenisch ungesättigten Monomeren, vorzugsweise des Acrylnitrils oder Methacrylnitrils, insbesondere des Acrylnitrils als Komponente A22.

Der verbleibende Anteil der Pfropfgrundlage A1 besteht dabei aus den vorstehend beschriebenen Verbindungen. Die Pfropfauflage A2 besteht dabei aus mindestens einer Pfropfhülle.

Gemäß einer Ausführungsform der Erfindung besteht Komponente A1 aus den Monomeren

a11: 2 - 80 Gew.-%, vorzugsweise 5 - 50 Gew.-% mindestens einer Verbindung der allgemeinen Formel I, wie sie vorstehend definiert ist, als Komponente A11,

a12: 19 - 98 Gew.-%, vorzugsweise 49 - 95 Gew.-%, eines $C_{1-8}$-Alkyl-esters der Acrylsäure, vorzugsweise n-Butylacrylat und/oder Ethylhexylacrylat als Komponente A12,

a13: 0 - 20 Gew.-%, vorzugsweise 0 - 5,0 Gew.-%, mindestens eines polyfunktionellen vernetzenden Monomeren, vorzugsweise Tricyclodecenylacrylat als Komponente A13,

wobei die Mengen der Komponenten A11, A12 und ggf. A13 insgesamt 100 Gew.-% ergeben.

Geeignete Monomere zur Bildung der Pfropfauflage A2 können beispielsweise aus den im folgenden aufgeführten Monomeren und deren Gemischen ausgewählt sein:

Vinylaromatische Monomeren A21, wie Styrol und seine substituierten Derivate, wie z.B. α-Methylstyrol, p-Methylstyrol, 3,4-Dimethylstyrol, p-tert.-Butylstyrol, o- und p-Divinylbenzol und p-Methyl-α-Methylstyrol oder $C_1$-$C_8$-Alkyl(meth)acrylate wie Methylmethacrylat, Ethylmethacrylat, Methylacrylat, Ethylacrylat, n-Butylacrylat, s-Butylacrylat; bevorzugt sind Styrol,α-Methylstyrol, Methylmethacrylat, insbesondere Styrol und/oder α-Methylstyrol, und ethylenisch ungesättigte Monomeren A22, wie Acryl- und Methacrylverbindungen, wie z.B. Acrylnitril, Methacrylnitril, Acryl- und Methacrylsäure, Methylacrylat, Ethylacrylat, n- und Isopropylacrylat, n- und Isobutylacrylat, tert.-Butylacrylat, 2-Ethylhexylacrylat, Methylmethacrylat, Ethylmethacrylat, n- und Isopropylmethacrylat, n- und Isobutylmethacrylat, tert.-Butylmethacrylat, Cyclohexylmethacrylat, Isobornylmethacrylat, Maleinsäureanhydrid und dessen Derivate, wie Maleinsäure-ester, Maleinsäurediester und Maleinimide, z.B. Alkyl- und Arylmaleinimide, wie beispielsweise Methyl- oder Phenylmaleinimid. Bevorzugt sind Acrylnitril und Methacrylnitril, insbesondere Acrylnitril.

Weiterhin können als (Co-) Monomeren Styrol-, Vinyl-, Acryl- oder Methacrylverbindungen (z.B. Styrol, wahlweise substituiert mit $C_{1-12}$-Alkylresten, Halogenatomen, Halogenmethylenresten; Vinylnaphthalin, Vinylcarbazol; Vinylether mit $C_{1-12}$-Etherresten; Vinylimidazol, 3-(4-)Vinylpyridin, Dimethylaminoethyl(meth)acrylat, p-Dimethylaminostyrol, Acrylnitril, Methacrylnitril, Acrylsäure, Methacrylsäure, Acrylsäurebutylester, Acrylsäureethylhexylester und Methylmethacrylat sowie Fumarsäure, Maleinsäure, Itaconsäure oder deren Anhydride, Amide, Nitrile oder Ester mit 1 bis 22 C-Atome, vorzugsweise 1 bis 10 C-Atome enthaltenden Alkoholen) verwendet werden.

In einer bevorzugten Ausführungsform besteht die Pfropfauflage A2 aus mindestens einer Pfropfhülle und die äußerste Pfropfhülle davon hat eine Glasübergangstemperatur von mehr als 30°C, wobei ein aus den Monomeren der Pfropfauflage A2 gebildetes Polymer eine Glasübergangstemperatur von mehr als 80°C aufweisen würde.

Bezüglich der Messung der Glasübergangstemperatur und der mittleren Teilchengröße sowie der Q-Werte gilt für die Pfropfcopolymerisate A das für die Emulsionspolymerisate A Gesagte.

Die Pfropfcopolymerisate A können auch durch Pfropfung von vorgebildeten Polymeren auf geeignete Pfropfhomopolymerisate hergestellt werden. Beispiele dafür sind die Umsetzungsprodukte von Maleinsäureanhydrid- oder Säuregruppen enthaltenden Copolymeren mit basenhaltigen Kautschuken.

Geeignete Herstellverfahren für Pfropfcopolymerisate A sind die Emulsions-, Lösungs-, Masse- oder Suspensionspolymerisation. Bevorzugt werden die Pfropfcopolymerisate A durch radikalische Emulsionspolymerisation hergestellt, insbesondere in Gegenwart von Latices der Komponente A1 bei Temperaturen von 20°C - 90°C unter Verwendung wasserlöslicher oder öllöslicher Initiatoren wie Peroxodisulfat oder Benzylperoxid, oder mit Hilfe von Redoxinitiatoren. Redoxinitiatoren eignen sich auch zur Polymerisation unterhalb von 20°C.

Geeignete Emulsionspolymerisationsverfahren sind beschrieben in den DE-A-28 26 925, 31 49 358 und in der DE-C-12 60 135.

Der Aufbau der Pfropfhüllen erfolgt vorzugsweise im Emulsionspolymerisationsverfahren, wie es beschrieben ist in DE-A-32 27 555, 31 49 357, 31 49 358, 34 14 118. Das definierte Einstellen der erfindungsgemäßen Teilchengrößen von 50 - 1000 nm erfolgt bevorzugt nach den Verfahren, die beschrieben sind in der DE-C-12 60 135 und DE-A-28 26 925, bzw. Applied Polymer Science, Band 9 (1965), Seite 2929. Das Verwenden von Polymerisaten mit unterschiedlichen Teilchengrößen ist beispielsweise bekannt aus DE-A-28 26 925 und US 5,196,480.

Gemäß dem in der DE-C-12 60 135 beschriebenen Verfahren wird zunächst die Pfropfgrundlage A1 hergestellt, indem die Verbindung der Formel I und der oder die gemäß einer Ausführungsform der Erfindung verwendeten Acrylsäureester und das mehrfunktionelle, die Vernetzung bewirkende Monomere, ggf. zusammen mit den weiteren Comonomeren, in wäßriger Emulsion in an sich bekannter Weise bei Temperaturen zwischen 20 und 100°C, vorzugsweise zwischen 50 und 80°C, polymerisiert werden. Es können die üblichen Emulgatoren, wie beispielsweise Alkalisalze von Alkyl- oder Alkylarylsulfonsäuren, Alkylsulfate, Fettalkoholsulfonate, Salze höherer Fettsäuren mit 10 bis 30 Kohlenstoffatomen oder Harzseifen verwendet werden. Vorzugsweise verwendet man die Natriumsalze von Alkylsulfonaten oder Fettsäuren mit 10 bis 18 Kohlenstoffatomen. Gemäß einer Ausführungsform werden die Emulgatoren in Mengen von 0,5 - 5 Gew.-%, insbesondere von 1 - 2 Gew.-%, bezogen auf die bei der Herstellung der Pfropfgrundlage A1 eingesetzten Monomeren, eingesetzt. Im allgemeinen wird bei einem Gewichtsverhältnis von Wasser zu Monomeren von 2 : 1 bis 0,7 : 1 gearbeitet. Als Polymerisationsinitiatoren dienen insbesondere die gebräuchlichen Persulfate, wie beispielsweise Kaliumpersulfat. Es können jedoch auch Redoxsysteme zum Einsatz gelangen. Die Initiatoren werden im allgemeinen in Mengen von 0,1 - 1 Gew.-%, bezogen auf die bei der Herstellung der Pfropfgrundlage A1 eingesetzten Monomeren, eingesetzt. Als weitere Polymerisationshilfsstoffe können die üblichen Puffersubstanzen, durch welche pH-Werte von vorzugsweise 6 - 9 eingestellt werden, wie Natriumbicarbonat und Natriumpyrophosphat, sowie 0 - 3 Gew.-% eines Molekulargewichtsreglers, wie Mercaptane, Terpinole oder dimeres α-Methylstyrol, bei der Polymerisation verwendet werden.

Die genauen Polymerisationsbedingungen, insbesondere Art, Dosierung und Menge des Emulgators, werden innerhalb der oben angegebenen Bereiche im einzelnen so bestimmt, daß der erhaltene Latex des vernetzten Acrylsäureesterpolymerisats einen $d_{50}$-Wert im Bereich von etwa 50 - 1000 nm, vorzugsweise 50 - 150 nm, besonders bevorzugt im Bereich von 80 - 100 nm, besitzt. Die Teilchengrößenverteilung des Latex soll dabei vorzugsweise eng sein. Der Quotient Q soll < 0,5, vorzugsweise < 0,35 sein.

Zur Herstellung des Pfropfpolymerisats A wird sodann in einem nächsten Schritt in Gegenwart des so erhaltenen Latex des vernetzten Polymerisats gemäß einer Ausführungsform der Erfindung ein Monomerengemisch aus Styrol und Acrylnitril polymerisiert, wobei das Gewichtsverhältnis von Styrol zu Acrylnitril in dem Monomerengemisch gemäß einer Ausführungsform der Erfindung im Bereich von 100 : 0 bis 40 : 60, vorzugsweise im Bereich von 65 : 35 bis 85 : 15, liegen soll. Es ist vorteilhaft, diese Pfropfcopolymerisation von Styrol und Acrylnitril auf das als Pfropfgrundlage dienende vernetzte Polymerisat wieder in wäßriger Emulsion unter den üblichen, vorstehend beschriebenen Bedingungen durchzuführen. Die Pfropfcopolymerisation kann zweckmäßig im gleichen System erfolgen wie die Emulsionspolymerisation zur Herstellung der Pfropfgrundlage A1, wobei, falls notwendig, weiterer Emulgator und Initiator zugegeben werden kann. Das gemäß einer Ausführungsform der Erfindung aufzupfropfende Monomerengemisch aus Styrol und Acrylnitril kann dem Reaktionsgemisch auf einmal, absatzweise in mehreren Stufen oder vorzugsweise kontinuierlich während der Polymerisation zugegeben werden. Die Pfropfcopolymerisation des Gemisches von Styrol und Acrylnitril in Gegenwart der Pfropfgrundlage wird so geführt, daß ein Pfropfgrad von 1 - 99 Gew.-%, vorzugsweise 20 - 45 Gew.-%, insbesondere 35 - 45 Gew.-%, bezogen auf das Gesamtgewicht der Komponente A, im Pfropfcopolymerisat A resultiert. Da die Pfropfausbeute bei der Pfropfcopolymerisation nicht 100% beträgt, muß eine etwas größere Menge des Monomerengemisches aus Styrol und Acrylnitril bei der Pfropfcopolymerisation eingesetzt werden, als es dem gewünschten Pfropfgrad entspricht. Die Steuerung der Pfropfausbeute bei der Pfropfcopolymerisation und somit des Pfropfgrades des fertigen Pfropfcopolymerisats A ist dem Fachmann geläufig und kann beispielsweise u.a. durch die Dosiergeschwindigkeit der Monomeren oder durch Reglerzugabe erfolgen (Chauvel, Daniel, ACS Polymer Preprints 15 (1974), Seite 329 ff.). Bei der Emulsions-Pfropfcopolymerisation entstehen im allgemeinen etwa 5 - 15 Gew.-%, bezogen auf das Pfropfcopolymerisat, an freiem, ungepfropftem Styrol/Acrylnitril-Copolymerisat. Der Anteil des Pfropfcopolymerisats A in dem bei der Pfropfcopolymerisation erhaltenen Polymerisationsprodukt wird nach der oben angegebenen Methode ermittelt.

Bei der Herstellung der Pfropfcopolymerisate A nach dem Emulsionsverfahren sind neben den gegebenen verfahrenstechnischen Vorteilen auch reproduzierbare Teilchengrößenveränderungen möglich, beispielsweise durch zumindest teilweise Agglomeration der Teilchen zu größeren Teilchen. Dies bedeutet, daß in den Pfropfcopolymerisaten A auch Polymere mit unterschiedlichen Teilchengrößen vorliegen können.

Vor allem die Komponente A aus Pfropfgrundlage und Pfropfhülle(n) kann für den jeweiligen Verwendungszweck optimal angepaßt werden, insbesondere in bezug auf die Teilchengröße.

Die Pfropfcopolymerisate A enthalten im allgemeinen 55 - 80 und bevorzugt 55 - 65 Gew.-% Pfropfgrundlage A1 und 20 - 45, bevorzugt 35 - 45 Gew.-% der Pfropfauflage A2, jeweils bezogen auf das gesamte Pfropfcopolymerisat.

## KOMPONENTE B

Komponente B ist ein amorphes oder teilkristallines Polymerisat.

Vorzugsweise handelt es sich bei Komponente B um ein Copolymerisat aus

b1: 40 bis 100 Gew.-%, vorzugsweise 60 bis 70 Gew.-%, Einheiten eines vinylaromatischen Monomeren, vorzugsweise des Styrols, eines substituierten Styrols oder eines (Meth)acrylsäureesters oder deren Gemische, insbesondere des Styrols und/oder α-Methylstyrols als Komponente B1,

b2: bis 60 Gew.-%, vorzugsweise 30 bis 40 Gew.-%, Einheiten eines ethylenisch ungesättigten Monomeren, vorzugsweise des Acrylnitrils oder Methacrylnitrils, insbesondere des Acrylnitrils als Komponente B2.

Gemäß einer bevorzugten Ausführungsform der Erfindung beträgt die Viskositätszahl der Komponente B 50 bis 90, vorzugsweise 60 bis 80.

Gemäß einer Ausführungsform der Erfindung ist Komponente B dabei aus 50 bis 99 Gew.-% vinylaromatischen Monomeren und 1 bis 50 Gew.-% mindestens eines der weiteren Monomeren aufgebaut, ausgewählt aus Olefinen, wie Ethylen, Propylen, 1-Buten, 1-Penten, 1-Hexen, 1-Hepten, 3-Methyl-1-buten, 4-Methyl-1-buten, 4-Methyl-1-penten, 1-Octen.

Vorzugsweise ist Komponente B ein amorphes Polymerisat, wie es vorstehend als Pfropfauflage A2 beschrieben ist. Gemäß einer Ausführungsform der Erfindung wird als Komponente B ein Copolymerisat von Styrol und/ oder $\alpha$-Methylstyrol mit Acrylnitril verwendet. Der Acrylnitrilgehalt in diesen Copolymerisaten der Komponente B beträgt dabei 0 bis 60 Gew.-%, vorzugsweise 30 bis 40 Gew.-%, bezogen auf das Gesamtgewicht der Komponente B. Zur Komponente B zählen auch die bei der Pfropfcopolymerisation zur Herstellung der Komponente A entstehenden freien, nicht gepfropften Styrol/Acrylnitril-Copolymerisate. Je nach den bei der Pfropfcopolymerisation für die Herstellung des Pfropfcopolymerisats A gewählten Bedingungen kann es möglich sein, daß bei der Pfropfcopolymerisation schon ein hinreichender Anteil an Komponente B gebildet worden ist. Im allgemeinen wird es jedoch erforderlich sein, die bei der Pfropfcopolymerisation erhaltenen Produkte mit zusätzlicher, separat hergestellter Komponente B abzumischen.

Bei dieser zusätzlichen, separat hergestellten Komponente B kann es sich vorzugsweise um ein Styrol/Acrylnitril-Copolymerisat, ein $\alpha$-Methylstyrol/ Acrylnitril-Copolymerisat oder ein a-Methylstyrol/Styrol/Acrylnitril-Terpolymerisat handeln. Diese Copolymerisate können einzeln oder auch als Gemisch für die Komponente B eingesetzt werden, so daß es sich bei der zusätzlichen, separat hergestellten Komponente B der erfindungsgemäß verwendeten Formmassen beispielsweise um ein Gemisch aus einem Styrol/Acrylnitril-Copolymerisat und einem $\alpha$-Methylstyrol/Acrylnitril-Copolymerisat handeln kann. In dem Fall, in dem die Komponente B der erfindungsgemäß verwendeten Formmassen aus einem Gemisch aus einem Styrol/Acrylnitril-Copolymerisat und einem a-Methylstyrol/Acrylnitril-Copolymerisat besteht, sollte vorzugsweise der Acrylnitrilgehalt der beiden Copolymerisate um nicht mehr als 10 Gew.-%, vorzugsweise nicht mehr als 5 Gew.-%, bezogen auf das Gesamtgewicht des Copolymerisats, voneinander abweichen. Die Komponente B der erfindungsgemäß verwendeten Formmassen kann jedoch auch nur aus einem einzigen Styrol/ Acrylnitril-Copolymerisat bestehen, wenn bei den Pfropfcopolymerisationen zur Herstellung der Komponente A als auch bei der Herstellung der zusätzlichen, separat hergestellten Komponente B von dem gleichen Monomergemisch aus Styrol und Acrylnitril ausgegangen wird.

Die zusätzliche, separat hergestellte Komponente B kann nach den herkömmlichen Verfahren erhalten werden. So kann gemäß einer Ausführungsform der Erfindung die Copolymerisation des Styrols und/oder $\alpha$-Methylstyrols mit dem Acrylnitril in Masse, Lösung, Suspension oder wäßriger Emulsion durchgeführt werden. Die Komponente B hat vorzugsweise eine Viskositätszahl von 40 bis 100, bevorzugt 50 bis 90, insbesondere 60 bis 80. Die Bestimmung des Viskositätszahl erfolgt dabei nach DIN 53 726, dabei werden 0,5 g Material in 100 ml Dimethylformamid gelöst.

In einer bevorzugten Ausführungsform enthalten die Formmassen neben den Komponenten A und B zusätzliche Komponenten C und/oder D, sowie ggf. weitere Zusatzstoffe, wie im folgenden beschrieben.

## KOMPONENTE C

Geeignete Polycarbonate C sind an sich bekannt. Sie haben vorzugsweise ein Molekulargewicht (Gewichtsmittelwert $M_w$, bestimmt mittels Gelpermeationschromatographie in Tetrahydrofuran gegen Polystyrolstandards) im Bereich von 10 000 bis 60 000 g/mol. Sie sind z.B. entsprechend den Verfahren der DE-B-1 300 266 durch Grenzflächenpolykondensation oder gemäß dem Verfahren der DE-A-1 495 730 durch Umsetzung von Diphenylcarbonat mit Bisphenolen erhältlich. Bervorzugtes Bisphenol ist 2,2-Di(4-hydroxyphenyl)propan, im allgemeinen - wie auch im folgenden - als Bisphenol A bezeichnet.

Anstelle von Bisphenol A können auch andere aromatische Dihydroxyverbindungen verwendet werden, insbesondere 2,2-Di(4-hydroxyphenyl)pentan, 2,6-Dihydroxynaphthalin, 4,4'-Dihydroxydiphenylsulfon, 4,4'-Dihydroxydiphenylether, 4,4'-Dihydroxydiphenylsulfit, 4,4'-Dihydroxydiphenylmethan, 1,1-Di-(4-hydroxyphenyl)ethan, 4,4'-Dihydroxydiphenyl oder Dihydroxydiphenylcycloalkane, bevorzugt Dihydroxydiphenylcyclohexane oder Dihydroxydiphenylcyclopentane, insbesondere 1,1-Bis(4-hydroxyphenyl)-3,3,5-trimethylcyclohexan sowie Mischungen der vorgenannten Dihydroxyverbindungen.

Besonders bevorzugte Polycarbonate sind solche auf der Basis von Bisphenol A oder Bisphenol A zusammen mit bis zu 80 Mol-% der vorstehend genannten aromatischen Dihydroxyverbindungen.

Es können auch Copolycarbonate gemäß der US 3,737,409 verwendet werden; von besonderem Interesse sind dabei Copolycarbonate auf der Basis von Bisphenol A und Di-(3,5-dimethyl-dihydroxyphenyl)sulfon, die sich durch eine hohe Wärmeformbeständigkeit auszeichnen. Ferner ist es möglich, Mischungen unterschiedlicher Polycarbonate einzusetzen.

Die mittleren Molekulargewichte (Gewichtsmittelwert $M_w$, bestimmt mittels Gelpermeationschromatographie in Tetrahydrofuran gegen Polystyrolstandards) der Polycarbonate C liegen erfindungsgemäß im Bereich von 10 000 bis 64 000 g/mol. Bevorzugt liegen sie im Bereich von 15 000 bis 63 000, insbesondere im Bereich von 15 000 bis 60 000 g/mol. Dies bedeutet, daß die Polycarbonate C relative Lösungsviskositäten im Bereich von 1,1 bis 1,3, gemessen in 0,5 gew.-%iger Lösung in Dichlormethan bei 25°C, bevorzugt von 1,15 bis 1,33, haben. Vorzugsweise unterscheiden sich die relativen Lösungsviskositäten der eingesetzten Polycarbonate um nicht mehr als 0,05, insbesondere nicht mehr 0,04.

Die Polycarbonate C können sowohl als Mahlgut als auch in granulierter Form eingesetzt werden. Sie liegen als Komponente C in Mengen von 0 bis 50 Gew.-%, bevorzugt von 10 bis 40 Gew.-%, jeweils bezogen auf die gesamte Formmasse, vor.

Der Zusatz von Polycarbonaten führt gemäß einer Ausführungsform der Erfindung unter anderem zu höherer Thermostabilität und verbesserter Rißbeständigkeit der Formmassen.

**Komponente D**

Als Komponente D enthalten die bevorzugten erfindungsgemäßen thermoplastischen Formmassen 0 bis 50 Gew.-%, vorzugsweise 0 bis 40 Gew.-%, insbesondere 0 bis 30 Gew.-% faser- oder teilchenförmige Füllstoffe oder deren Mischungen, jeweils bezogen auf die gesamte Formmasse. Dabei handelt es sich vorzugsweise um kommerziell erhältliche Produkte. Verstärkungsmittel wie Kohlenstoffasern und Glasfasern werden üblicherweise in Mengen von 5 bis 50 Gew.-% verwendet, bezogen auf die gesamte Formmasse.

Die verwendeten Glasfasern können aus E-, A- oder C-Glas sein und sind vorzugsweise mit einer Schlichte und einem Haftvermittler ausgerüstet. Ihr Durchmesser liegt im allgemeinen zwischen 6 und 20 µm. Es können sowohl Endlosfasern (rovings) als auch Schnittglasfasern (staple) mit einer Länge von 1 bis 10 µm, vorzugsweise 3 bis 6 µm, eingesetzt werden.

Weiterhin können Füll- oder Verstärkungsstoffe, wie Glaskugeln, Mineralfasern, Whisker, Aluminiumoxidfasern, Glimmer, Quarzmehl und Wollastonit zugesetzt werden.

Außerdem können Metallflocken (z.B. Aluminiumflocken der Fa. Transmet Corp.), Metallpulver, Metallfasern, metallbeschichtete Füllstoffe, z.B. nickelbeschichtete Glasfasern sowie andere Zuschlagstoffe, die elektromagnetische Wellen abschirmen, den erfindungsgemäßen Formmassen beigemischt werden. Insbesondere kommen Aluminiumflocken (K 102 der Fa. Transmet) für EMI-Zwecke (electro-magnetic interference) in Betracht. Ferner können die Massen mit zusätzlichen Kohlenstoffasern, Ruß, insbesondere Leitfähigkeitsruß, oder nickelbeschichteten C-Fasern vermischt werden.

Die erfindungsgemäßen Formmassen können ferner weitere Zusatzstoffe enthalten, die für Polycarbonate, SAN-Polymerisate und Pfropfcopolymerisate oder deren Mischungen typisch und gebräuchlich sind. Als solche Zusatzstoffe seien beispielsweise genannt: Farbstoffe, Pigmente, Färbemittel, Antistatika, Antioxidantien, Stabilisatoren zur Verbesserung der Thermostabilität, zur Erhöhung der Lichtstabilität, zum Anheben der Hydrolysebeständigkeit und der Chemikalienbeständigkeit, Mittel gegen die Wärmezersetzung und insbesondere die Schmier-/Gleitmittel, die für die Herstellung von Formkörpern bzw. Formteilen zweckmäßig sind. Das Eindosieren dieser weiteren Zusatzstoffe kann in jedem Stadium des Herstellungsprozesses erfolgen, vorzugsweise jedoch zu einem frühen Zeitpunkt, um frühzeitig die Stabilisierungseffekte (oder anderen speziellen Effekte) des Zusatzstoffes auszunutzen. Wärmestabilisatoren bzw. Oxidationsverzögerer sind üblicherweise Metallhalogenide (Chloride, Bromide, Iodide), die sich von Metallen der Gruppe I des Periodensystems der Elemente ableiten (wie Li, Na, K, Cu).

Geeignete Stabilisatoren sind die üblichen gehinderten Phenole, aber auch Vitamin E bzw. analog aufgebaute Verbindungen. Auch HALS-Stabilisatoren (Hindered Amine Light Stabilizers), Benzophenone, Resorcine, Salicylate, Benzotriazole und andere Verbindungen sind geeignet (beispielsweise Irganox®, Tinuvin®, wie Tinuvin® 770 (HALS-Absorber, Bis (2,2,6,6-tetramethyl-4-piperidyl)sebazat oder Tinuvin® P (UV-Absorber - (2H-Benzotriazol-2-yl)-4-methylphenol), Topanol® ). Diese werden üblicherweise in Mengen bis zu 2 Gew.-% (bezogen auf das Gesamtgemisch) verwendet.

Geeignete Gleit- und Entformungsmittel sind Stearinsäuren, Stearylalkohol, Stearinsäureester bzw. allgemein höhere Fettsäuren, deren Derivate und entsprechende Fettsäuregemische mit 12 - 30 Kohlenstoffatomen. Die Mengen dieser Zusätze liegen im Bereich von 0,05 bis 1 Gew.-%.

Auch Siliconöle, oligomeres Isobutylen oder ähnliche Stoffe kommen als Zusatzstoffe in Frage, die üblichen Mengen betragen 0,05 bis 5 Gew.-%. Pigmente, Farbstoffe, Farbaufheller, wie Ultramarinblau, Phthalocyanine, Titandioxid, Cadmiumsulfide, Derivate der Perylentetracarbonsäure sind ebenfalls verwendbar.

Verarbeitungshilfsmittel und Stabilisatoren wie UV-Stabilisatoren, Schmiermittel und Antistatika werden üblicherweise in Mengen von 0,01 bis 5 Gew.-% verwendet, bezogen auf die gesamte Formmasse.

Die Herstellung der erfindungsgemäßen thermoplastischen Formmassen kann nach an sich bekannten Verfahren durch Mischen der Komponenten erfolgen. Es kann vorteilhaft sein, einzelne Komponenten vorzumischen. Auch das Mischen der Komponenten in Lösung und Entfernen der Lösungsmittel ist möglich.

Wenn die Komponenten A und B beispielsweise durch Emulsionspolymerisation hergestellt worden sind, ist es möglich, die erhaltenen Polymerdispersionen miteinander zu vermischen, darauf die Polymerisate gemeinsam auszufällen und das Polymerisatgemisch aufzuarbeiten. Die in wäßriger Dispersion erhaltenen Produkte der Pfropfcopolymerisation (Komponente A) können auch nur teilweise entwässert werden und als feuchte Krümel mit der Komponente B vermischt werden, wobei dann während des Vermischens die vollständige Trocknung der Pfropfcopolymerisate erfolgt.

Geeignete organische Lösungsmittel sind beispielsweise Chlorbenzol, Gemische aus Chlorbenzol und Methylenchlorid oder Gemische aus Chlorbenzol und aromatischen Kohlenwasserstoffen, z.B. Toluol.

Das Eindampfen der Lösungsmittelgemische kann beispielsweise in Eindampfextrudern erfolgen.

Das Mischen der z.B. trockenen Komponenten kann nach allen bekannten Methoden erfolgen. Vorzugsweise geschieht jedoch das Mischen der Komponenten A, B und ggf. C und/oder D durch gemeinsames Extrudieren, Kneten oder Verwalzen der Komponenten, bevorzugt bei Temperaturen von 180 bis 400 °C, wobei die Komponenten notwendigenfalls zuvor aus der bei der Polymerisation erhaltenen Lösung oder aus der wäßrigen Dispersion isoliert worden sind.

Dabei können die Komponenten gemeinsam oder getrennt/nacheinander eindosiert werden.

Aus den erfindungsgemäßen Formmassen können gemäß einer Ausführungsform der Erfindung Formkörper nach den bekannten Verfahren der Thermoplastverarbeitung hergestellt werden. Insbesondere kann die Herstellung durch Thermoformen, Extrudieren, Spritzgießen, Kalandrieren, Hohlkörperblasen, Pressen, Preßsintern, Tiefziehen oder Sintern erfolgen.

Die Erfindung betrifft ferner Formkörper aus den erfindungsgemäßen Formmassen. Durch Verwendung der erfindungsgemäßen Vernetzer wird die Schlagzähigkeit der Formmassen bzw. Formkörper verbessert.

Insbesondere Formkörper aus Formmassen, die als Komponente C Polycarbonate enthalten, sind sehr wärmeformbeständig und widerstandsfähig gegen anhaltende Wärme. Durch Zusatz des Polycarbonats als Komponente C wird dabei die Wärmeformbeständigkeit und Schlagzähigkeit der Formkörper weiter verbessert. Diese Formkörper weisen zudem ein ausgewogenes Verhältnis von Zähigkeit und Steifigkeit und eine gute Dimensionsstabilität sowie eine hervorragende Widerstandsfähigkeit gegen Wärmealterung und eine hohe Vergilbungsbeständigkeit bei thermischer Belastung und Einwirkung von UV-Strahlung auf.

Weitere vorteilhafte Eigenschaften der Formkörper sind die hohe Witterungsstabilität, gute thermische Beständigkeit, hohe Vergilbungsbeständigkeit bei UV-Bestrahlung und thermischer Belastung, gute Spannungsrißbeständigkeit, insbesondere bei Einwirkung von Chemikalien, und ein gutes antielektrostatisches Verhalten. Zudem weisen sie eine hohe Farbstabilität auf, beispielsweise auch infolge der hervorragenden Beständigkeit gegen Vergilben und Verspröden. Die erfindungsgemäßen Formkörper aus den erfindungsgemäßen thermoplastischen Formmassen zeigen sowohl bei tiefen Temperaturen wie auch nach längerer Wärmeeinwirkung keinen signifikanten Verlust an Zähigkeit bzw. Schlagzähigkeit, die auch bei der Belastung durch UV-Strahlen erhalten bleibt. Auch die Zugfestigkeit bleibt erhalten. Zudem zeigen sie ein ausgewogenes Verhältnis zwischen Steifigkeit und Zähigkeit.

Die Erfindung wird anhand der nachfolgenden Beispiele näher erläutert.

***BEISPIEL 1***

*Herstellung von Pfropfcopolymerisat* (*A*)

(a1) 160 g eines Monomerengemisches aus 69 Teilen Butylacrylat, einem Teil Maleinsäureanhydrid, 28 Teilen Acrylamid mit 250 polymerisierten Isobuteneinheiten als Amidrest und zwei Teilen Tricyclodecenylacrylat, wurden in 1500 g Wasser unter Zusatz von 5 g des Natriumsalzes einer $C_{12-18}$-Paraffinsulfonsäure, 3 g Kaliumpersulfat, 3 g Natriumhydrogencarbonat und 1,5 g Natriumpyrophosphat unter Rühren auf 60°C erwärmt. 10 Minuten nach dem Anspringen der Polymerisationsreaktion wurden innerhalb von 3 Stunden weitere 48 g des Monomerengemisches zugegeben. Nach Beendigung der Monomerzugabe wurde noch 1 Stunde bei 60°C nachreagieren gelassen.

(a2) 2100 g der in (a1) hergestellten Emulsion wurden mit 1150 g Wasser und 2,7 g Kaliumpersulfat gemischt und unter Rühren auf 65°C erwärmt. Sodann wurden im Verlauf von 3 Stunden 500 g eines Monomerengemisches zudosiert, bestehend aus 73 Gewichtsteilen Styrol, 25 Gewichtsteilen Acrylnitril und 2 Gewichtsteilen Dimethylaminoethylacrylat. Nach Beendigung der Zugabe wurde die Emulsion noch zwei Stunden bei 65°C gehalten. Das erhaltene Pfropfpolymerisat wurde sodann in einer 15%igen wäßrigen $CaCl_2$-Lösung aus der Emulsion gefällt, mit Wasser gewaschen und im Luftstrom bei 40 bis 65°C getrocknet. Der Pfropfgrad des Pfropfcopolymerisats betrug 39%, die Teilchengröße 100 nm.

*BEISPIEL 2*

*Herstellung von Pfropfcopolymerisat (a)*

(a1) 100 g n-Butylacrylat, 60 g des Acrylamids aus Beispiel 1 und 4 g Tricyclodecenylacrylat wurden in 1500 g Wasser unter Zusatz von 1 g des Natriumsalzes einer $C_{12-18}$-Paraffinsulfonsäure, 3 g Kaliumpersulfat, 3 g Natriumhyrogencarbonat und 1,5 g Natriumpyrophosphat unter Rühren auf 60°C erwärmt. Zehn Minuten nach dem Anspringen der Polymerisationsreaktion wurde innerhalb von drei Stunden eine Mischung aus 500 g n-Butylacrylat, 300 g des Acrylamids und 8 g Tricyclodecenylacrylat zugegeben. Nach Beendingung der Monomerzugabe wurde noch eine Stunde nachreagieren gelassen. Die erhaltene Emulsion des Acrylatpolymerisates hatte einen Feststoffgehalt von etwa 40 Gew.-%.

(a2) 1500 g der Emulsion aus (a1) wurden mit 400 g einer Mischung aus Styrol und Acrylnitril (Gewichtsverhältnis 75:25) und 600 g Wasser gemischt und unter Rühren nach Zusatz von weiteren 0,5 g Kaliumpersulfat und 0,5 g Lauroylperoxid vier Stunden auf 65°C erhitzt. Nach Beendigung der Pfropfmischpolymerisation wurde das Polymerisat mit einer $CaCl_2$-Lösung gefällt bei 95°C, mit Wasser gewaschen und im warmen Luftstrom getrocknet. Der Pfropfgrad betrug 35%, die Teilchengröße 90 nm.

*BEISPIEL 3*

Das Verfahren gemäß Beispiel 1 wurde ausgeführt, jedoch wurde statt des Acrylamids ein (Polybutadienyl) acrylat eines Polybutadiens aus 20 Butadiengrundbausteinen verwendet und kein Tricyclodecenylacrylat eingesetzt.

*BEISPIEL 4*

Das Verfahren gemäß Beispiel 2 wurde ausgeführt, jedoch wurde die Verbindung aus Beispiel 3 verwendet und kein Tricyclodecenylacrylat eingesetzt.

*BEISPIEL 5*

*Herstellung von Copolymerisat (B)*

Ein Monomeren-Gemisch aus Styrol und Acrylnitril wurde unter üblichen Bedingungen in Lösung polymerisiert. Das erhaltene Styrol/Acrylnitril-Copolymerisat hatte einen Acrylnitril-Gehalt von 35 Gew.-% bezogen auf das Copolymerisat, und eine Viskositätszahl von 80 ml/g.

*BEISPIEL 6*

**(VERGLEICHSBEISPIEL)**

Das Verfahren gemäß Beispiel 3 wurde wiederholt, jedoch wurde statt des (Polybutadienyl)acrylats eine entsprechende Menge n-Butylacrylat eingesetzt.

**HERSTELLUNG DER FORMMASSEN**

Aus 40 Gew.-% der Polymerisate (A) gemäß Beispielen 1 bis 4 und 6 und 60 Gew.-% des Polymerisats aus Beispiel 5 wurden in einem Schneckenextruder bei einer Temperatur von 200 bis 230°C Formmassen hergestellt. Aus den Formmassen wurden Probekörper spritzgegossen nach den in DIN 1677 angegebenen Einspritzbedingungen. Bei den Probekörpern handelte es sich um Normkleinstäbe zur Messung der Kerbschlagzähigkeit.
An den Probekörpern wurde die Kerbschlagzähigkeit in $kJ/m^2$ gemessen gemäß DIN 53354. Die Ergebnisse für die Kerbschlagzähigkeit bei 23°C sind in Tabelle 1 wiedergegeben, für eine Temperatur von 0°C in Tabelle 2. Die in Klammern angegebenen Werte beziehen sich auf die Vergleichsformmasse, die Vergleichskomponente A aus Beispiel 6 enthielt.

## TABELLE 1

### Kerbschlagzähigkeit in kJ/m$^2$ bei 23°C

| Komponente A aus Beispiel | Einspritztemperatur | | |
|---|---|---|---|
| | 220°C | 260°C | 280°C |
| 1 | -- | 30 (26) | 30 (26) |
| 2 | 31 (26) | -- | -- |
| 3 | -- | 31 (26) | 32 (26) |
| 4 | 34 (26) | -- | -- |

## TABELLE 2

### Kerbschlagzähigkeit in kJ/m$^2$ bei O°C

| Komponente A aus Beispiel | Einspritztemperatur | | |
|---|---|---|---|
| | 220°C | 260°C | 280°C |
| 1 | -- | 24 (14) | 26 (14) |
| 2 | 28 (14) | -- | -- |
| 3 | -- | 23 (14) | 24 (14) |
| 4 | 26 (14) | -- | -- |

Aus den in den Tabellen angegebenen Werten geht hervor, daß die erfindungsgemäßen Formmassen eine wesentlich bessere Kerbschlagzähigkeit aufweisen als die bekannten Formmassen.

**Patentansprüche**

1. Verwendung von Verbindungen der allgemeinen Formel (I)

$$H_2C=CR^1-C(O)-Y-R^2 \qquad\qquad (I)$$

in der

R$^1$ H, CH$_3$, C$_2$H$_5$, C$_3$H$_7$
Y O, NH, O-Phenylen
R$^2$ ein Rest aus 2 bis 10000 polymerisierten Isobuteneinheiten oder
2 bis 1000 polymerisierten Butadieneinheiten oder Isopreneinheiten ist

zur Herstellung von teilchenförmigen Emulsionspolymerisaten mit einer Glasübergangstemperatur von unterhalb 0°C und einer mittleren Teilchengröße von 50 bis 1000 nm.

2. Teilchenförmige Emulsionspolymerisate mit einer Glasübergangstemperatur von unterhalb 0°C und einer mittleren Teilchengröße von 50 bis 1000 nm, wobei 1 bis 80 Gew.-% der Emulsionspolymerisate aus Verbindungen der allgemeinen Formel I, wie sie in Anspruch 1 definiert sind, aufgebaut sind.

3. Pfropfcopolymerisate mit einer Glasübergangstemperatur von unterhalb 0°C und einer mittleren Teilchengröße von 50 bis 1000 nm, aufgebaut aus einer teilchenförmigen Pfropfgrundlage A1 mit einer Glasübergangstemperatur unterhalb von 0°C und einer Pfropfauflage A2 aus vinylaromatischen und/oder ethylenisch ungesättigten Monomeren, wobei 2 bis 80 Gew.-% der Pfropfgrundlage A1 aus Verbindungen der allgemeinen Formel I, wie sie in Anspruch 1 definiert sind, aufgebaut sind.

4. Thermoplastische Formmasse, enthaltend, bezogen auf die Summe der Mengen der Komponenten A und B und ggf. C und/oder D, die insgesamt 100 Gew.-% ergibt,

a: 1 - 99 Gew.-% eines teilchenförmigen Emulsionspolymerisats mit einer Glasübergangstemperatur unterhalb von 0 °C und einer mittleren Teilchengröße von 50 - 1000 nm das zu 1 - 80 Gew.-%, bezogen auf die Menge der Komponente A, aus Verbindungen der allgemeinen Formel 1, wie sie in Anspruch 1 definiert sind, aufgebaut ist, als Komponente A,

b: 1 - 99 Gew.-% mindestens eines amorphen oder teilkristallinen Polymerisats als Komponente B,

c: 0 - 50 Gew.-% Polycarbonate als Komponente C und

d: 0 - 50 Gew.-% faser- oder teilchenförmige Füllstoffe oder deren Gemische als Komponente D.

5. Formmasse nach Anspruch 4, **dadurch gekennzeichnet, daß** es sich bei der Komponente A um ein Pfropfcopolymerisat handelt aus

a1: 55 - 80 Gew.-% einer teilchenförmigen Pfropfgrundlage A1 mit einer Glasübergangstemperatur unterhalb von 0 °C, die zu 2 - 80 Gew.-% , bezogen auf die Menge der Komponente A1, aus Verbindungen der allgemeinen Formel I, wie sie in Anspruch 1 definiert sind, aufgebaut ist,

a2: 20 - 45 Gew.-% einer Pfropfauflage A2 aus den Monomeren, bezogen auf A2,

a21: 40 - 100 Gew.-% Einheiten eines vinylaromatischen Monomeren als Komponente A21 und

a22: bis 60 Gew.-% Einheiten eines ethylenisch ungesättigten Monomeren als Komponente A22,

wobei die Pfropfauflage A2 aus mindestens einer Pfropfhülle besteht.

6. Formmasse nach Anspruch 5, **dadurch gekennzeichnet, daß** die Komponente A1 besteht aus den Monomeren

a11: 2 - 80 Gew.-% mindestens einer Verbindung der allgemeinen Formel I, wie sie in Anspruch 1 definiert ist, als Komponente A11,

a12: 19 - 98 Gew.-% eines $C_{1-8}$-Alkylesters der Acrylsäure als Komponente A12,

a13: 0 - 20 Gew.-%, mindestens eines polyfunktionellen vernetzenden Monomeren als Komponente A13,

wobei die Summe der Mengen der Komponenten A11, A12 und ggf. A13 insgesamt 100 Gew.-% ergibt.

**7.** Formmasse nach einem der Ansprüche 4 bis 6, **dadurch gekennzeichnet, daß** es sich bei der Komponente B um ein Copolymerisat handelt aus

b1: 40 - 100 Gew.-% Einheiten eines vinylaromatischen Monomeren als Komponente B1,

b2: bis 60 Gew.-% Einheiten eines ethylenisch ungesättigten Monomeren als Komponente B2.

**8.** Verfahren zur Herstellung von Formmassen nach einem der Ansprüche 4 bis 7, wobei die Komponenten A, B und ggf. C und/oder D durch gemeinsames Extrudieren, Kneten oder Verwalzen bei einer Temperatur von 180 - 400°C gemischt werden.

**9.** Verwendung von Formmassen nach einem der Ansprüche 4 bis 7 zur Herstellung von Formkörpern.

**10.** Formkörper aus einer Formmasse nach einem der Ansprüche 4 bis 7.

**11.** Verfahren zur Herstellung von Formkörpern nach Anspruch 10 durch Thermoformen, Extrudieren, Spritzgießen, Kalandrieren, Hohlkörperblasen, Pressen, Preßsintern, Tiefziehen oder Sintern einer Formmasse nach einem der Ansprüche 4 bis 7.

**Claims**

**1.** The use of a compound of the formula (I)

$$H_2C=CR^1\text{-}C(O)\text{-}Y\text{-}R^2 \qquad\qquad (I)$$

where

$R^1$ is H, $CH_3$, $C_2H_5$ or $C_3H_7$,
Y is O, NH or O-phenylene and
$R^2$ is a radical comprising from 2 to 10,000 polymerized isobutene units or from 2 to 1000 polymerized butadiene units or isoprene units,

for the preparation of particulate emulsion polymers having a glass transition temperature below 0°C and a mean particle size of from 50 to 1000 nm.

**2.** A particulate emulsion polymer having a glass transition temperature below 0°C and a mean particle size of from 50 to 1000 nm, from 1 to 80% by weight of the emulsion polymer being composed of a compound of the formula I as defined in claim 1.

**3.** A graft copolymer having a glass transition temperature below 0°C and a mean particle size of from 50 to 1000 nm, composed of a particulate grafting base A1 having a glass transition temperature below 0°C and a graft layer A2 comprising vinylaromatic or ethylenically unsaturated monomers, from 2 to 80% by weight of the grafting base A1 being composed of a compound of the formula I as defined in claim 1.

**4.** A thermoplastic molding material containing, based on the sum of the amounts of components A and B and, if required, C or D, which altogether gives 100% by weight,

a: from 1 to 99% by weight of a particulate emulsion polymer having a glass transition temperature below 0°C and a mean particle size of from 50 to 1000 nm which is composed of from 1 to 80% by weight, based on the amount of component A, of a compound of the formula I as defined in claim -1 as component A,

b: from 1 to 99% by weight of at least one amorphous or semicrystalline polymer as component B,

c: from 0 to 50% by weight of polycarbonates as component C, and

d: from 0 to 50% by weight of fibrous or particulate fillers or mixtures thereof as component D.

5. A molding material as claimed in claim 4, wherein component A is a graft copolymer of

a1: from 55 to 80% by weight of a particulate grafting base A1 which has a glass transition temperature below 0°C and is composed of from 2 to 80% by weight, based on the amount of component A1, of a compound of the formula I as defined in claim 1,

a2: from 20 to 45% by weight of a graft layer A2 comprising as monomers, based on A2,

a21: from 40 to 100% by weight of units of a vinylaromatic monomer as component A21, and

a22: up to 60% by weight of units of an ethylenically unsaturated monomer as component A22,

the graft layer A2 comprising at least one graft shell.

6. A molding material as claimed in claim 5, wherein the component A1 consists of, as monomers,

a11: from 2 to 80% by weight of at least one compound of the formula I as defined in claim 1 as component A11,

a12: from 19 to 98% by weight of a $C_{1-8}$-alkyl ester of acrylic acid as component A12, and

a13: from 0 to 20% by weight of at least one polyfunctional crosslinking monomer as component A13,

the sum of the amounts of the components A11, A12 and, if required, A13 altogether giving 100% by weight.

7. A molding material as claimed in any of claims 4 to 6, wherein component B is a copolymer of

b1: from 40 to 100% by weight of units of a vinylaromatic monomer as component B1, and

b2: up to 60% by weight of units of an ethylenically unsaturated monomer as component B2.

8. A process for the preparation of a molding material as claimed in any of claims 4 to 7, wherein components A, B and, if required, C or D are mixed by extruding, kneading or roll-milling them together at from 180 to 400°C.

9. The use of a molding material as claimed in any of claims 4 to 7 for the production of a molding.

10. A molding comprising a molding material as claimed in any of claims 4 to 7.

11. A process for the production of a molding as claimed in claim 10 by thermoforming, extrusion, injection molding, calendering, blow molding, compression molding, pressure sintering or sintering a molding material as claimed in any of claims 4 to 7.

**Revendications**

1. Utilisations de composés de la formule générale (I):

$$H_2C=CR^1\text{-}C(O)\text{-}Y\text{-}R^2 \tag{I}$$

dans laquelle

$R^1$ représente H, $CH_3$, $C_2H_5$, $C_3H_7$,
Y représente O, NH, O-phénylène,
$R^2$ représente un radical de 2 à 10.000 unités d'isobutène polymérisées ou 2 à 1.000 unités d'isoprène ou unités de butadiène polymérisées,

pour la préparation de produits de polymérisation en émulsion particulaires ayant un température de transition vitreuse inférieure à 0°C et une taille moyenne des particules de 50 à 1.000 nm.

**2.** Produits de polymérisation en émulsion particulaires ayant une température de transition vitreuse inférieure à 0°C et une taille moyenne des particules de 50 à 1.000 nm, 1 à 80% en poids des produits de polymérisation en émulsion étant constitués de composés de la formule générale I, tels que définis dans la revendication 1.

**3.** Produits de copolymérisation par greffage ayant une température de transition vitreuse inférieure à 0°C et une taille moyenne des particules de 50 à 1.000 nm, constitués d'une base de greffage particulaire A1 ayant une température de transition vitreuse inférieure à 0°C et d'une couche greffée A2 en monomères vinylaromatiques et/ou éthyléniquement insaturés, 2 à 80% en poids de la base de greffage A1 étant constitués de composés de la formule générale I, tels que définis dans la revendication 1.

**4.** Masse de moulage thermoplastique, contenant, par rapport à la somme des quantités des composants A et B et éventuellement C et/ou D, qui donne au total 100% en poids,

a : 1 à 99% en poids d'un produit de polymérisation en émulsion particulaire ayant une température de transition vitreuse inférieure à 0°C et une taille moyenne des particules de 50 à 1.000 nm, qui est constitué pour 1 à 80% en poids, par rapport à la quantité du composant A, de composés de la formule générale I, tels que définis dans la revendication 1, à titre de composant A,
b : 1 à 99% en poids d'au moins un polymère amorphe ou partiellement cristallin, à titre de composant B,
c : 0 à 50% en poids de polycarbonates, à titre de composant C, et
d : 0 à 50% en poids de matières de remplissage fibreuses ou particulaires ou de leurs mélanges, à titre de composant D.

**5.** Masse de moulage suivant la revendication 4, **caractérisée en ce que**, en ce qui concerne le composant A, il s'agit d'un produit de copolymérisation par greffage constitué

a1 : de 55 à 80% en poids d'une base de greffage particulaire A1 ayant une température de transition vitreuse inférieure à 0°C, qui est constituée pour 2 à 80% en poids, par rapport à la quantité du composant A1, de composés de la formule générale I, tels que définis dans la revendication 1,
a2 : de 20 à 45% en poids d'une couche greffée A2 à base des monomères, par rapport à A2,
a21 : de 40 à 100% en poids d'unités d'un monomère vinylaromatique, comme composant A21, et
a22 : de jusqu'à 60% en poids d'unités d'un monomère éthyléniquement insaturé, comme composant A22,

la couche greffée A2 étant constituée d'au moins une enveloppe de greffage.

**6.** Masse de moulage suivant la revendication 5, **caractérisée en ce que** le composant A1 est constitué des monomères

a11 : 2 à 80% en poids d'au moins un composé de la formule générale I, telle que définie dans la revendication 1, comme composant A11,
a12 : 19 à 98% en poids d'un ester alkylique en $C_1$-$C_8$ de l'acide acrylique, comme composant A12,
a13 : 0 à 20% en poids d'au moins un monomère réticulant polyfonctionnel, comme composant A13,

la somme des quantités des composants A11, A12 et éventuellement A13 donnant au total 100% en poids.

7. Masse de moulage suivant l'une des revendications 4 à 6, **caractérisée en ce que**, en ce qui concerne le composant B, il s'agit d'un copolymère à base

   b1 : de 40 à 100% en poids d'unités d'un monomère vinylaromatique comme composant B1,
   b2 : de jusqu'à 60% en poids d'unités d'un monomère éthyléniquement insaturé, comme composant B2.

8. Procédé de préparation de masses de moulage suivant l'une des revendications 4 à 7, dans lequel les composants A, B et éventuellement C et/ou D sont mélangés par extrusion, pétrissage ou laminage commun à une température de 180 à 400°C.

9. Utilisation de masses de moulage suivant l'une des revendications 4 à 7, pour la fabrication de corps façonnés.

10. Corps façonnés à base d'une masse de moulage suivant l'une des revendications 4 à 7.

11. Procédé de préparation de corps façonnés suivant la revendication 10, par thermoformage, extrusion, moulage par injection, calandrage, soufflage de corps creux, pressage, frittage sous pression, emboutissage ou frittage d'une masse de moulage suivant l'une des revendications 4 à 7.